# EUROPÄISCHE PATENTSCHRIFT

(11) **EP 3 838 629 B1**
(45) Veröffentlichungstag und Bekanntmachung des Hinweises auf die Patenterteilung: **05.04.2023**
(21) Anmeldenummer: 20204263.6
(22) Anmeldetag: 28.10.2020
(51) Int. Cl.: B60C 13/00, B29D 30/06, B29D 30/72, B60C 13/02

(54) **FAHRZEUGLUFTREIFEN AUFWEISEND EINE OBERFLÄCHENKONTRASTSTRUKTUR MIT STEGEN**
PNEUMATIC VEHICLE TYRE COMPRISING A CONTRASTING SURFACE STRUCTURE WITH RIDGES
PNEUMATIQUES DE VÉHICULE COMPORTANT UNE STRUCTURE DE SURFACE À CONTRASTE POURVUE DE NERVURES

(30) Priorität: 18.12.2019 DE 102019220004
(43) Veröffentlichungstag der Anmeldung: 23.06.2021
(73) Patentinhaber: Continental Reifen Deutschland GmbH, 30165 Hannover (DE)
(72) Erfinder: Rittweger, Stefan, 30419 Hannover (DE)
(74) Vertreter: Continental Corporation

(56) Entgegenhaltungen:
- DE-A1-102006 031 779
- JP-A- S53 109 306
- US-A1- 2012 216 930
- US-A1- 2012 227 879

## Beschreibung

Die Erfindung betrifft einen Fahrzeugreifen mit zumindest einem auf einer Außenfläche des Fahrzeugreifens, insbesondere einer Seitenwandaußenfläche und/oder einer Laufstreifenaußenfläche, ausgebildeten Flächenelement mit einer Oberflächenkontraststruktur mit nebeneinander angeordneten Stegen und wobei eine Höhe zumindest eines ersten Steges der Stege entlang der länglichen Erstreckung des zumindest einen ersten Steges kontinuierlich abnimmt. Weiter betrifft die Erfindung ein Verfahren zu Herstellung eines solchen Reifens.

Es ist bekannt, auf der Außenfläche von Fahrzeugluftreifen, insbesondere auf einer Seitenwandaußenfläche und/oder einer Laufstreifenaußenfläche, Flächenelemente mit einer Kontraststruktur auszubilden, welche vorrangig die Aufgabe haben, einen Kontrast zu anderen, insbesondere zu unstrukturierten, Flächenbereichen der Seitenwände und/oder des Laufstreifens zu schaffen, um derart die Erkennbarkeit von auf der Seitenwandaußenfläche und/oder dem Laufstreifen befindlichen Markierungen zu verbessern. Eine Markierung kann dabei graphische Elemente wie Abbildungen, Schriftzeichen, Firmennamen, Firmenlogos, Kennzeichnungen, Flächen, etc. umfassen. Das Flächenelement aufweisend die Kontraststruktur kann dabei Teil der Markierung sein und/oder diese ganz oder teilweise umgeben.

Eine solche Kontraststruktur weist in der Regel Erhebungen und/oder Vertiefungen auf. Die Streuung von Licht an den Flanken der Erhebungen oder Vertiefungen verringert die Reflektion des Lichts an der Oberfläche des Reifens, wodurch die Helligkeitswirkung verändert ist. In der Regel wirken dabei mit Erhebungen oder Vertiefungen versehene Oberflächenbereiche dunkler als im Wesentlichen glatte, von derartigen Erhebungen freie, Oberflächenbereiche. Somit ist ein Kontrast in der an sich monochromen Oberfläche des Reifens, insbesondere der Seitenwandaußenfläche und/oder der Laufstreifenaußenfläche, ermöglicht. Hierdurch können Darstellungen von Markierungen verbessert sichtbar gemacht werden.

Derartige Flächenelemente aufweisend eine Kontraststruktur werden in der Regel im Zuge der Vulkanisation des Reifens mittels einer formgebenden eine Negativkontur der Kontraststruktur aufweisenden Vulkanisationsform in den Reifen geprägt. Eine Oberfläche aufweisend eine Kontraststruktur eines bereits vulkanisierten Reifens kann aber auch durch Abtragung, z.B. mittels Gravur, oder durch ein additives Verfahren erreicht werden.

Bekannt ist beispielsweise aus der US 2012/0227879 A1 ein Fahrzeugluftreifen, der auf seiner äußeren Oberfläche eine Kontraststruktur aus einer Vielzahl von länglichen oder faserartigen Erhebungen zur kontrastreichen Oberflächengestaltung aufweist. Aus der WO 2014 040 967 A1 ist ein Fahrzeugluftreifen bekannt, der auf seiner äußeren Oberfläche eine Kontraststruktur aus einer Vielzahl von Vertiefungen zur kontrastreichen Oberflächengestaltung aufweist.

Nachteilig an derartigen Ausführungsformen ist, dass die Gestaltungsmöglichkeiten gering sind. Insbesondere für die Darstellung von graphischen Elementen ist es aber von Vorteil, den Kontrast variabel einzustellen.

Die DE 102006031779 A1 offenbart ein Laufstreifenprofil eines Fahrzeugreifens mit verbesserter Traktionseigenschaft bei gleichzeitig vorteilhafter Geräuschentwicklung. Das Laufstreifenprofil weist Profilrillen mit Stegen auf, deren Höhe entlang ihrer länglichen Erstreckung in einem Knick abnimmt. Die JP S53109306 A offenbart einen Fahrzeugluftreifen, der im Schulterbereich in der Höhe kontinuierlich abnehmende Stege aufweist, die eine gewünschte Geräuschentwicklung begünstigen. Die US 2012216930 A1 offenbart einen Fahrzeugluftreifen mit in der Höhe abnehmenden Stegen auf seiner äußeren Oberfläche.

Aufgabe ist es daher, die Kontrastwirkung noch gezielter zu beeinflussen und eine Kontrastabnahme innerhalb des Flächenelements zu ermöglichen.

Dies wird dadurch erreicht, dass eine Höhe zumindest eines ersten Steges der Stege entlang der länglichen Erstreckung des zumindest einen ersten Steges kontinuierlich abnimmt und dass die nebeneinander angeordneten Stege der Oberflächenkontraststruktur einen Wiederholungsabstand von 0,2 mm bis 1,2 mm aufweisen.

Wesentlich ist, dass die Kontrastwirkung beeinflussende Faktoren wie der Grad der Verschattung und/oder die für Reflexion, insbesondere Mehrfachreflexion, und für Absorption zur Verfügung stehende Flankenflächen eines Steges maßgeblich von der Höhe des Steges abhängen. Es hat sich gezeigt, dass durch eine kontinuierliche Abnahme der Höhe des zumindest einen ersten Steges die Kontrastwirkung bzw. die Dunkelwirkung der Oberflächenkontraststruktur entlang der länglichen Erstreckung des zumindest einen ersten Steges gezielt verringerbar ist und somit eine kontinuierliche Kontrastabnahme entlang der länglichen Erstreckung des zumindest einen ersten Steges erwirkbar ist.

Somit ist die Kontrastwirkung noch gezielter beeinflussbar und eine kontinuierliche Kontrastabnahme innerhalb des Flächenelements ermöglicht.

Die nebeneinander angeordneten Stege der Oberflächenkontraststruktur weisen erfindungsgemäß einen Wiederholungsabstand von 0,2 mm bis 1,2 mm, auf. Durch einen derartigen Wiederholungsabstand, oftmals auch pitch genannt, ist eine vorteilhafte Kontrastwirkung des Flächenelements erreichbar.

Der zumindest eine erste Steg kann sich von einer Basis nach außen weisend erstrecken und in einem Grat enden. Der Grat kann im Querschnitt des Steges spitz oder abgerundet oder abgeflacht oder mit einer anderen Form ausgeführt sein.

Die Höhe des zumindest einen ersten Steges kann gemessen sein von einem Höhenniveau der Basis bis zu einem Höhenniveau des Grates. Die Höhe kann dabei gemessen sein senkrecht zur einem Oberflächenniveau der Außenfläche des Reifens. Das Oberflächenniveau im Bereich der Seitenwandaußenfläche und der Lauffläche kann durch die Außenkontur des Reifens ohne zusätzliche Elemente wie dekorative Elemente, Schriftzeichen, die Oberflächenkontraststruktur, Schutzrippen, etc., gegeben sein. Die Höhe kann alternativ gemessen sein senkrecht zum Höhenniveau des Grates oder zum Höhenniveau der Basis. Bevorzugt ist die Höhe gemessen senkrecht zum Oberflächenniveau.

Ein Höhenniveau des Grates und/oder ein Höhenniveau der Basis des zumindest einen ersten Steges kann, insbesondere produktionsbedingt, entlang der länglichen Erstreckung des Steges Unregelmäßigkeiten aufweisen. Das Höhenniveau des Grates und/oder das Höhenniveau der Basis kann dann jeweils einem mittleren Höhenniveau entsprechen.

Eine vorteilhafte Ausführungsform ist dadurch gegeben, dass die Höhe des zumindest einen ersten Steges entlang seiner länglichen Erstreckung um insgesamt mindestens 60%, bevorzugt um mindestens 80%, besonders bevorzugt um 100%, abnimmt.

Es hat sich gezeigt, dass eine besonders deutlicher Kontrastverlauf dadurch erreichbar ist, dass die Höhe entlang der länglichen Erstreckung des zumindest einen ersten Steges um insgesamt mindestens 60 % abnimmt. Besonders deutlich ist die Kontrastabnahme, wenn die Höhe entlang der länglichen Erstreckung des zumindest einen ersten Steges um insgesamt mindestens 80 % abnimmt. Nimmt die Höhe um insgesamt 100 % ab, so weist der zumindest eine erste Steg an einem Ende seiner länglichen Erstreckung keine Höhe auf. Die Oberflächenkontraststruktur kann dort dann einer von der Oberflächenkontraststruktur freien, insbesondere glatten, Außenfläche des Reifens entsprechen. Die Oberflächenkontraststruktur kann dort dann weitgehend keinen Kontrast mehr zur glatten Außenfläche des Reifens aufweisen.

Vorteilhaft ist es auch, wenn mindestens 50% der Stege, bevorzugt alle Stege, der Oberflächenkontraststruktur als erste Stege ausgebildet sind. Hierdurch ist eine Kontrastwirkung mit einer kontinuierlichen Kontrastabnahme über eine flächige Erstreckung, insbesondere über das gesamte Flächenelement, ermöglicht.

Zweckmäßig ist es dabei, wenn alle ersten Stege in der gleichen Richtung entlang ihrer länglichen Erstreckung in der Höhe abnehmen.

Eine weitere vorteilhafte Ausführungsform ist dadurch gegeben, dass die Höhe des zumindest einen ersten Steges entlang seiner länglichen Erstreckung mit konstanter Steigung abnimmt. Eine Abnahme der Höhe mit konstanter Steigung bewirkt eine besonders gleichmäßige Kontrastabnahme.

Eine weitere vorteilhafte Ausführungsform ist dadurch gegeben, dass die Höhe des zumindest einen ersten Steges entlang seiner länglichen Erstreckung mit einer Steigung von 0,6° bis 3,5° abnimmt. Auch hierdurch ist ein vorteilhafter Kontrastverlauf erreichbar.

Vorteilhaft ist es, wenn ein entlang der länglichen Erstreckung des zumindest einen ersten Steges verlaufender Grat des zumindest einen ersten Steges ganz oder teilweise bezüglich eines Oberflächenniveaus der Außenfläche des Reifens nach innen zurückversetzt ist. Durch die Zurückversetzung nicht nur einer Basis des zumindest einen Grates sondern auch des Grates des zumindest einen Grates ist der den Kontrastverlauf bewirkende zumindest eine erste Steg vor Beschädigung geschützt. Die Abnahme des Abstandes des Grates zum Oberflächenniveau verstärkt die Kontrastabnahme weiter.

Eine weitere vorteilhafte Ausführungsform ist dadurch gegeben, dass ein Abstand eines entlang der länglichen Erstreckung des zumindest einen ersten Steges verlaufenden Grates zu einem Oberflächenniveau der Außenfläche des Reifens in Richtung der Abnahme der Höhe des zumindest einen ersten Steges abnimmt.

Hierdurch gleicht sich das Höhenniveau der äußeren Oberfläche des zumindest einen ersten Steges dem Oberflächenniveau der Außenfläche in Richtung der Abnahme der Höhe an. Hierdurch wird die Kontrastabnahme in dieser Richtung weiter verstärkt. Der Abstand kann gemessen sein senkrecht zum Oberflächenniveau.

Bevorzugt ist der Grat dabei ganz oder teilweise bezüglich des Oberflächenniveaus nach innen zurückversetzt. Zweckmäßig ist es dabei, wenn der Grat im Bereich der maximalen Höhe des zumindest einen ersten Steges um den Abstand 0,1 bis 0,3 mm, bevorzugt 0,2 mm, zurückversetzt ist und/oder wenn der Grat im Bereich einer minimalen Höhe des zumindest einen ersten Steges um den Abstand 0 mm bis 0,1 mm, bevorzugt 0,05 mm, zurückversetzt ist.

Vorteilhaft ist es, wenn die längliche Erstreckung des zumindest einen ersten Steges einen zumindest teilweise geradlinigen und/oder zumindest teilweise gekrümmten, insbesondere bogenförmig gekrümmten, Verlauf aufweist.

Der geradlinige und/oder gekrümmte Verlauf kann dabei in der Draufsicht auf die Außenfläche bestimmt sein. Ist die Außenfläche die Seitenwandaußenfläche, kann die Draufsicht in axialer Richtung erfolgen. Ist die Außenfläche die Lauffläche oder ein Rillengrund, kann die Draufsicht in radialer Richtung erfolgen.

Der zumindest eine erste Steg kann auf seiner gesamten länglichen Erstreckung geradlinig oder gekrümmt ausgeführt sein. Der zumindest eine erste Steg kann aber auch nur teilweise geradlinig und/oder nur teilweise gekrümmt ausgeführt sein. Bei einer gekrümmten Ausführung des zumindest einen ersten Steges kann es sich um eine sogenannte Bogenschraffur handeln.

Durch die zumindest teilweise geradlinige und/oder zumindest teilweise gekrümmte Ausführung können spezielle Kontrastverläufe auf dem Flächenelement realisiert werden.

Vorteilhaft ist es, wenn die maximale Höhe des zumindest einen ersten Steges 0,1 mm bis 0,7 mm, bevorzugt 0,2 mm bis 0,5 mm, besonders bevorzugt 0,3 mm, beträgt. Eine derartige maximale Höhe des zumindest einen ersten Steges ermöglicht eine ausreichende Änderung der Höhe des zumindest einen ersten Steges für eine vorteilhafte Kontrastdifferenz.

Vorteilhaft ist es auch, wenn die nebeneinander angeordneten Stege der Oberflächenkontraststruktur einen Wiederholungsabstand von 0,4 mm bis 0,7 mm, besonders bevorzugt 0,5 mm bis 0,6 mm, aufweisen. Durch einen derartigen Wiederholungsabstand, oftmals auch pitch genannt, ist eine vorteilhafte Kontrastwirkung des Flächenelements erreichbar.

Zweckmäßig ist es dabei, wenn die Stege jeweils einander gegenüberliegende seitliche Flanken aufweisen, die einen Winkel von 5° bis 60° miteinander einschließen. Derartig steile Flanken sind vorteilhaft für eine besonders starke Kontrastwirkung und ermöglichen einen geringen Wiederholungsabstand. Hierdurch ist eine starke Kontraständerung ermöglicht.

Eine vorteilhafte Ausführungsform ist dadurch gegeben, dass die Oberflächenkontraststruktur auf einer Seitenwandaußenfläche des Fahrzeugluftreifens angeordnet ist und dass die Stege in ihrer länglichen Erstreckung einen Winkel von -45° bis 45°, bevorzugt -30° bis 30°, besonders bevorzugt in etwa 0°, mit einer radialen Richtung rR einschließen. Hierdurch ergibt sich eine vorteilhafte Kontraständerung von radial innen nach radial außen.

Eine vorteilhafte Kontrastabnahme von radial innen nach radial außen ist dabei dadurch ermöglicht, dass die Höhe von radial innen nach radial außen abnimmt.

Eine vorteilhafte Kontrastabnahme von radial außen nach radial innen ist dabei aber auch dadurch ermöglicht, dass die Höhe von radial außen nach radial innen abnimmt.

Vorteilhaft ist es, wenn die Oberflächenkontraststruktur von zumindest einem graphischen Element unterbrochen ist, das frei von einer derartigen Oberflächenkontraststruktur ist, und dass die Oberflächenkontraststruktur das graphische Element umgibt.

Das graphische Element kann insbesondere ein Vieleck oder ein Buchstabe sein. Eine besonders gute Kontrastwirkung zwischen der Oberflächenkontraststruktur und dem graphischen Element ergibt sich, wenn die Oberfläche des graphischen Elements in ihrer Struktur der Außenfläche entspricht. Zweckmäßig ist es auch, wenn ein Höhenniveau der Oberfläche des graphischen Elements dem Oberflächenniveau der Außenfläche des Reifens entspricht.

Einer oder mehrere der Stege, insbesondere einer oder mehrere der ersten Stege, können von dem graphischen Element unterbrochen sein. Die Stege können dabei außerhalb der Unterbrechung durch das graphische Element so verlaufen, als wären sie frei von einer Unterbrechung.

In einer vorteilhaften Ausführungsform ist das Flächenelement auf der Seitenwandaußenfläche und/oder der Laufstreifenaußenfläche, bevorzugt auf einer Seitenwandaußenfläche, angeordnet.

In einer bevorzugten Ausführungsform ist das Flächenelement auf einer der Seitenwandaußenflächen des Fahrzeugreifens ausgebildet.

Gemäß einer weiteren bevorzugten Ausführungsform ist das Flächenelement auf einer Laufstreifenaußenfläche des Fahrzeugluftreifens ausgebildet. Das Flächenelement kann dabei insbesondere auch auf Rillenflanken und/oder Rillengründen von im Laufstreifen verlaufenden Rillen oder an der mit dem Untergrund in Kontakt tretenden Lauffläche angebracht sein.

Es kann sich um einen Reifen für einen Personenkraftwagen, für ein Motorrad, ein Fahrrad oder für Nutzfahrzeug handeln.

Bevorzugt handelt es sich um einen Fahrzeugluftreifen.

Die Erfindung betrifft auch ein Verfahren zur Herstellung eines Fahrzeugreifens nach zumindest einem der vorhergehenden Ansprüche, dadurch gekennzeichnet, dass der Fahrzeugreifen mittels einer eine Formfläche aufweisenden Vulkanisationsform formgebend vulkanisiert wird, wobei die Formfläche eine Negativkontur der Oberflächenkontraststruktur aufweist. Hierdurch ist ein erfindungsgemäßer Reifen auf einfache Art und Weise herstellbar.

Weitere Merkmale, Vorteile und Einzelheiten der Erfindung werden nun anhand der Zeichnung, die schematisch Ausführungsbeispiele der Erfindung darstellt, näher beschrieben. Dabei zeigen
Fig. 1 einen Fahrzeugluftreifen 1 aufweisend zumindest eine Oberflächenkontraststruktur,
Fig. 2 eine Ansicht eines Steges;
Fig. 3 eine Draufsicht auf eine Seitenwandaußenfläche;
Fig. 4, Fig. 5 jeweils einen Querschnitt durch einen ersten Steg;

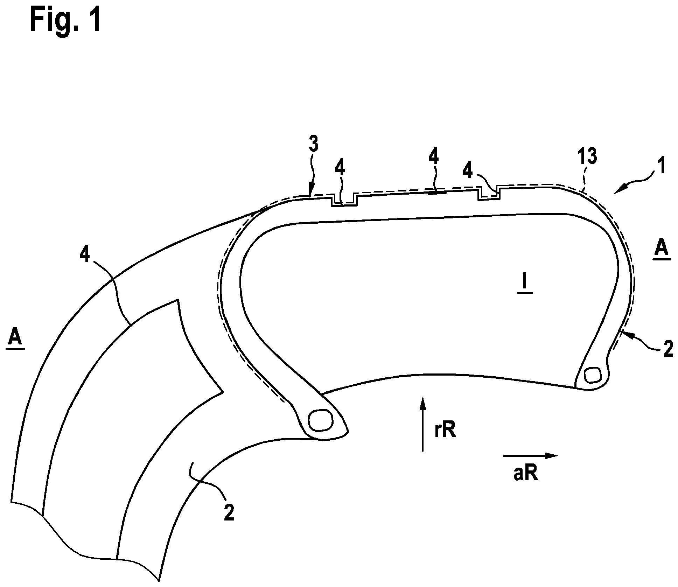

Die Figur 1 zeigt einen Fahrzeugluftreifen 1 mit zumindest einem auf einer Außenfläche 2,3 des Fahrzeugreifens 1, insbesondere einer Seitenwandaußenfläche 2 und/oder einer Laufstreifenaußenfläche 3, ausgebildeten Flächenelement 4 mit einer Oberflächenkontraststruktur 5. Bei einer Anordnung auf der Laufstreifenaußenfläche 3 kann die Oberflächenkontraststruktur 5 dabei insbesondere auch auf Rillenflanken und/oder Rillengründen von im Laufstreifen verlaufenden Rillen oder an der mit dem Untergrund in Kontakt tretenden Lauffläche angebracht sein.

Die Oberflächenkontraststruktur 5 weist nebeneinander angeordnete Stege 6 auf. Eine Höhe 7 zumindest eines ersten Steges 6 der Stege nimmt entlang der länglichen Erstreckung des zumindest einen ersten Steges 6 kontinuierlich ab.

Die Höhe 7 kann dabei entlang der länglichen Erstreckung des zumindest einen ersten Steges 6 um insgesamt mindestens 60%, bevorzugt um mindestens 80%, besonders bevorzugt um 100%, abnehmen.

Mindestens 50% der Stege 6, bevorzugt alle Stege 6, der Oberflächenkontraststruktur 5 können als erste Stege 6 ausgebildet sein. Dabei können alle erste Steges 6 in der gleichen Richtung 11 entlang ihrer länglichen Erstreckung in der Höhe 7 abnehmen.

Die nebeneinander angeordneten Stege 6 der Oberflächenkontraststruktur 5 weisen erfindungsgemäß einen Wiederholungsabstand 16 von 0,2 mm bis 1,2 mm, bevorzugt 0,4 mm bis 0,7 mm, besonders bevorzugt 0,5 mm bis 0,6 mm, auf. Die nebeneinander angeordneten Stege 6 der Oberflächenkontraststruktur 5 können dabei jeweils einander gegenüberliegende seitliche Flanken 17 aufweisen, die einen Winkel 18 von 5° bis 60° miteinander einschließen.

Die Oberflächenkontraststruktur 5 kann von zumindest einem graphischen Element 19 unterbrochen ist, das frei von einer derartigen Oberflächenkontraststruktur 5 ist, wobei die Oberflächenkontraststruktur 5 das graphische Element umgibt.

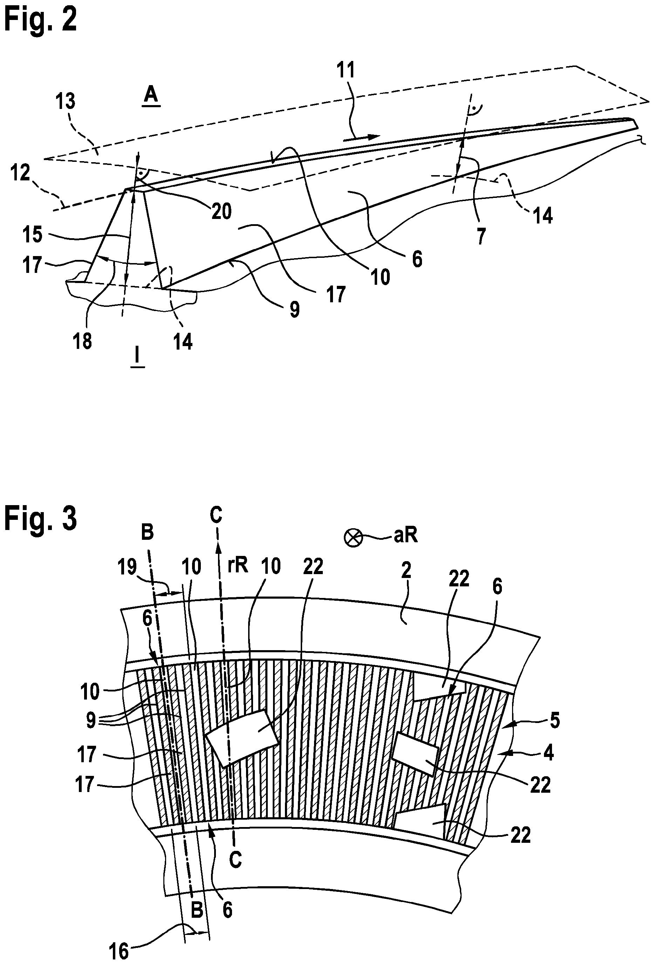

Die Fig. 2 zeigt eine Ansicht einer Ausführungsform eines derartig ausgebildeten geeigneten ersten Steges 6. Der erste Steg 6 erstreckt sich von einer Basis 9 nach außen A weisend und endet in einem Grat 10. Der Grat 10 kann im Querschnitt des Steges spitz oder abgerundet oder abgeflacht oder mit einer anderen Form ausgeführt sein. In der Fig. 2 ist der Grat 10 abgeflacht dargestellt.

Die Höhe 7 des ersten Steges 6 kann entlang der länglichen Erstreckung des Steges 6 um insgesamt mindestens 60%, bevorzugt um mindestens 80%, besonders bevorzugt um 100%, abfallen. Die Höhe 7 nimmt dabei entlang der Richtung 11 ab.

Die Höhe 7 des ersten Steges 6 kann gemessen sein von einem Höhenniveau 14 der Basis 9 bis zu einem Höhenniveau 12 des Grates 10. Die Höhe 7 kann dabei gemessen sein senkrecht zur einem Oberflächenniveau 13 der Außenfläche des Reifens. Das Oberflächenniveau kann durch die Außenkontur des Reifens ohne zusätzliche Elemente wie dekorative Elemente, Schriftzeichen, die Oberflächenkontraststruktur, Schutzrippen, etc., gegeben sein. Die Höhe 7 kann alternativ gemessen sein senkrecht zum Höhenniveau 12 des Grates oder zum Höhenniveau 14 der Basis. Bevorzugt ist die Höhe 7, wie in der Fig. 2 dargestellt, senkrecht zum Oberflächenniveau 13 gemessen.

Die maximale Höhe 15 des ersten Steges 6 kann 0,1 mm bis 0,7 mm, bevorzugt 0,2 mm bis 0,5 mm, besonders bevorzugt 0,3 mm, betragen.

Die Abnahme der Höhe 7 des ersten Steges 6 kann mit konstanter Steigung erfolgen.

Die Abnahme der Höhe 7 des ersten Steges 6 kann mit einer Steigung von 0,6° bis 3,5° erfolgen.

Der Abstand 20 des Grates 10 zum Oberflächenniveau 13 der Außenfläche 2,3 des Reifens 1 kann in der Richtung 11 der Abnahme der Höhe 7 des jeweiligen ersten Steges 6 abnehmen.

Bevorzugt ist der entlang der länglichen Erstreckung des ersten Steges 6 verlaufende Grat 10 des ersten Steges 6 ganz oder teilweise bezüglich des Oberflächenniveaus 13 der Außenfläche 2,3 des Reifens 1 nach innen I zurückversetzt.

Die Fig. 3 zeigt eine Draufsicht auf einen Ausschnitt einer Seitenwandaußenfläche 2 eines erfindungsgemäßen Reifens 1 in axialer Richtung. aufweisend ein Flächenelement 4 aufweisend eine Oberflächenkontraststruktur 5. Es kann sich um den Reifen der Fig. 1 und / oder die dort beschriebene Oberflächenkontraststruktur 5 handeln.

Der entlang der länglichen Erstreckung des zumindest einen ersten Steges 6 verlaufende Grat 10 des zumindest einen ersten Steges 6 kann ganz oder teilweise bezüglich eines Oberflächenniveaus 13 der Außenfläche 2,3 des Reifens 1 nach innen I zurückversetzt sein. Bevorzugt nimmt auch ein Abstand 20 des Grates 10 zu einem Oberflächenniveau 13 der Außenfläche 2,3 des Reifens 1 in Richtung 11 der Abnahme der Höhe 7 des zumindest einen ersten Steges 6 ab.

Wie dargestellt kann die Oberflächenkontraststruktur 5 von zumindest einem graphischen Element 22 unterbrochen sein, welches frei von einer derartigen Oberflächenkontraststruktur 5 ist, wobei die Oberflächenkontraststruktur 5 das graphische Element umgibt. Die Oberflächenkontraststruktur 5 kann aber auch frei von einer Unterbrechung ausgeführt sein.

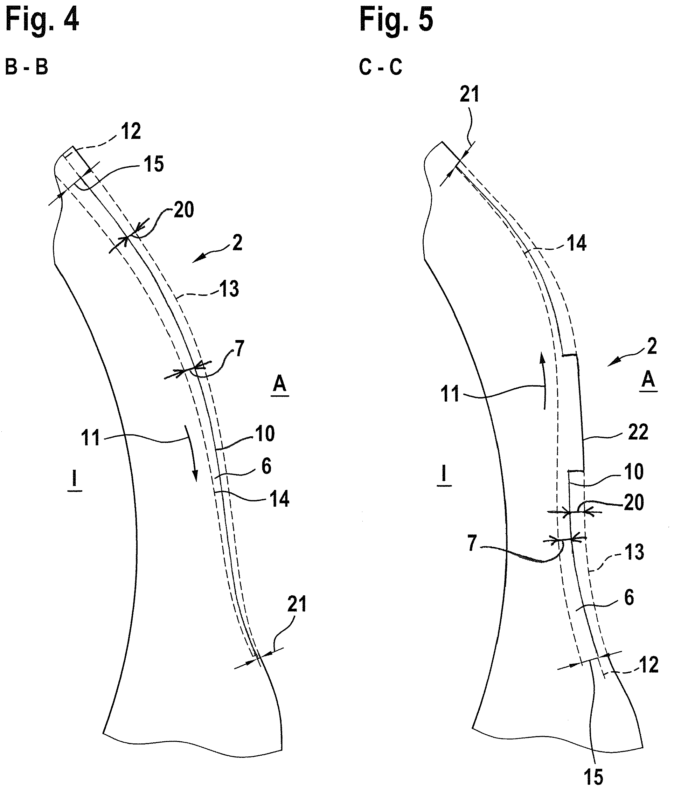

Mindestens 50% der Stege 6, bevorzugt alle Stege 6, der Oberflächenkontraststruktur 5 können als erster Steg 6 ausgebildet sind. Exemplarisch sind in der Fig. 3 alle abgebildeten Stege als erste Stege 6 ausgebildet. Die ersten Stege 6 der Oberflächenkontraststruktur nehmen in der gleichen Richtung 11 entlang ihrer länglichen Erstreckung in der Höhe 7 ab, siehe Fig. 4 oder 5.

Die Fig. 3 zeigt nebeneinander angeordnete Stege 6, die entsprechend der Ansicht in Fig. 2 einen Abstand zum jeweils benachbarten Steg 6 sowie einen abgeflachten Grat 10 aufweisen. Die Basen 10 der Stege können sich aber auch berühren und/oder der Querschnitt, insbesondere im Bereich des Grates 10, der Stege 6 kann eine andere Geometrie aufweisen.

Die nebeneinander angeordneten Stege 6 der Oberflächenkontraststruktur 5 weisen erfindungsgemäß einen Wiederholungsabstand 16 von 0,2 mm bis 1,2 mm, bevorzugt 0,4 mm bis 0,7 mm, besonders bevorzugt 0,5 mm bis 0,6 mm, auf.

Die nebeneinander angeordneten Stege 6 der Oberflächenkontraststruktur 5 können dabei jeweils einander gegenüberliegende seitliche Flanken 17 aufweisen, die einen Winkel 18 [siehe Fig. 2] von 5° bis 60° miteinander einschließen.

Ein Flächenelement 4 mit einer entsprechender Oberflächenkontraststruktur 5 kann auch auf der Laufstreifenaußenfläche 3 und/oder an anderer Stelle an der Seitenwandaußenfläche 2 eines erfindungsgemäßen Reifens 1 angeordnet sein.

Auf der Seitenwandaußenfläche 2 können die Stege 6 wie in der Fig. 3 dargestellt in ihrer länglichen Erstreckung einen Winkel 19 von -45° bis 45°, bevorzugt -30° bis 30°, besonders bevorzugt in etwa 0°, mit einer radialen Richtung rR einschließen. Die Höhe 7 kann dabei von radial innen nach radial außen abnehmen, siehe das Ausführungsbeispiel in Fig. 5. Die Höhe 7 kann auch, wie für ein anderes Ausführungsbeispiel in der Figur 4 gezeigt, von radial außen nach radial innen abnehmen.

Dargestellt ist, dass die längliche Erstreckung des zumindest einen ersten Steges 6 geradlinig ausgeführt ist. Die längliche Erstreckung des zumindest einen ersten Steges 6 kann aber auch ganz oder teilweise gekrümmt, insbesondere bogenförmig gekrümmt, ausgeführt ist. Benachbarte Stege 6 können so eine Bogenschraffur ergeben. Der geradlinige und/oder gekrümmte Verlauf kann dabei in der Draufsicht in axialer Richtung auf die Außenflächen 2 bestimmt sein.

Die Fig. 4 und Fig. 5 zeigen jeweils einen Querschnitt der in der Fig. 3 gezeigten Reifenseitenwand entlang der Grate 10 von ersten Stegen 6. Die Grate 10 beider ersten Stege 6 sind ganz oder teilweise bezüglich eines Oberflächenniveaus 13 der Außenfläche 2,3 des Reifens 1 nach innen I zurückversetzt.

Die maximale Höhe 15 der ersten Stege 6 beträgt 0,1 mm bis 0,7 mm, bevorzugt 0,2 mm bis 0,5 mm, besonders bevorzugt 0,3 mm.

Zweckmäßig ist es dabei, wenn der Grat 10 im Bereich der maximalen Höhe 15 des ersten Steges 6 um den Abstand 0,1 bis 0,3 mm, bevorzugt 0,2 mm, zurückversetzt ist und/oder wenn der Grat 10 im Bereich einer minimalen Höhe des ersten Steges um den Abstand 21 0 mm bis 0,1 mm, bevorzugt 0,05 mm, zurückversetzt ist.

Die Fig. 4 zeigt einen Schnitt entlang der Linie B-B, wobei der erste Steg 6 frei von einer Unterbrechung ist. In diesem Ausführungsbeispiel der Oberflächenkontraststruktur 5 der Figur 3 verläuft die Richtung 11 der Abnahme der Höhe 7 von radial außen nach radial innen. Der Abstand 20 des Grates 10 zum Oberflächenniveau 13 der Außenfläche 2 des Reifens 1 nimmt dabei in einer Richtung 11 der Abnahme der Höhe 7 des jeweiligen ersten Steges 6 ab.

Die Fig. 5 veranschaulicht ein Ausführungsbeispiel der Oberflächenkontraststruktur 5 der Figur 3, in welchem die Richtung 11 der Abnahme der Höhe 7 von radial innen nach radial außen.

Die Fig. 5 zeigt dabei einen Schnitt entlang der Linie C-C, wobei der Steg 6 eine Unterbrechung durch ein graphisches Element 22 aufweist. Die äußere Oberfläche 23 des graphischen Elements 22 kann dabei in seiner Struktur der Struktur der Außenfläche 2 entsprechen. Weiter kann das Höhenniveau der äußeren Oberfläche 23 des graphischen Elements 22 dem Oberflächenniveau 13 der Außenfläche des Reifens 1 entsprechen. Der Steg kann dabei außerhalb der Unterbrechung durch das graphische Element 22 so verlaufen, als wäre er frei von einer Unterbrechung.

Die in den Figuren dargestellten erfindungsgemäßen Reifen können durch ein formgebendes Vulkanisationsverfahren hergestellt werden, wobei der Fahrzeugreifen 1 mittels einer eine Formfläche aufweisenden Vulkanisationsform formgebend vulkanisiert wird, wobei die Formfläche eine Negativkontur der Oberflächenkontraststruktur 5 aufweist.

### Bezugszeichenliste

- 1: Fahrzeugluftreifen
- 2: Seitenwandaußenfläche
- 3: Laufstreifenaußenfläche
- 4: Flächenelement
- 5: Oberflächenkontraststruktur
- 6: Steg
- 7: Höhe
- 9: Basis
- 10: Grat
- 11: Richtung der Abnahme der Höhe
- 12: Höhenniveau des Grates
- 13: Oberflächenniveau der Außenfläche
- 14: Höhenniveau der Basis
- 15: maximale Höhe
- 16: Wiederholungsabstand
- 17: seitliche Flanke
- 18: Winkel
- 19: Winkel
- 20: Abstand
- I: Innen
- A: Außen

## Patentansprüche

1. Fahrzeugreifen (1) mit zumindest einem auf einer Außenfläche (2,3) des Fahrzeugreifens (1), insbesondere einer Seitenwandaußenfläche (2) und/oder einer Laufstreifenaußenfläche (3), ausgebildeten Flächenelement (4) mit einer Oberflächenkontraststruktur (5) mit nebeneinander angeordneten Stegen (6), wobei eine Höhe (7) zumindest eines ersten Steges (6) der Stege (6) entlang der länglichen Erstreckung des zumindest einen ersten Steges (6) kontinuierlich abnimmt,
**dadurch gekennzeichnet, dass**
die nebeneinander angeordneten Stege (6) der Oberflächenkontraststruktur (5) einen Wiederholungsabstand (16) von 0,2 mm bis 1,2 mm aufweisen.

2. Fahrzeugreifen (1) nach zumindest einem der vorhergehenden Ansprüche, **dadurch gekennzeichnet, dass** die Höhe (7) des zumindest einen ersten Steges (6) entlang seiner länglichen Erstreckung um insgesamt mindestens 60%, bevorzugt um mindestens 80%, besonders bevorzugt um 100%, abnimmt.

3. Fahrzeugreifen (1) nach zumindest einem der vorhergehenden Ansprüche, **dadurch gekennzeichnet, dass** mindestens 50% der Stege (6), bevorzugt alle Stege (6), der Oberflächenkontraststruktur (5) als erste Stege (6) ausgebildet sind.

4. Fahrzeugreifen (1) nach zumindest einem der vorhergehenden Ansprüche, **dadurch gekennzeichnet, dass** die Höhe (7) des zumindest einen ersten Steges (6) entlang seiner länglichen Erstreckung mit konstanter Steigung abnimmt.

5. Fahrzeugreifen (1) nach zumindest einem der vorhergehenden Ansprüche, **dadurch gekennzeichnet, dass** die Höhe (7) des zumindest einen ersten Steges (6) entlang seiner länglichen Erstreckung mit einer Steigung von 0,6° bis 3,5° abnimmt.

6. Fahrzeugreifen (1) nach zumindest einem der vorhergehenden Ansprüche, **dadurch gekennzeichnet, dass** ein entlang der länglichen Erstreckung des zumindest einen ersten Steges (6) verlaufender Grat (10) des zumindest einen ersten Steges (6) ganz oder teilweise bezüglich eines Oberflächenniveaus (13) der Außenfläche (2,3) des Reifens (1) nach innen zurückversetzt ist.

7. Fahrzeugreifen (1) nach zumindest einem der vorhergehenden Ansprüche, **dadurch gekennzeichnet, dass** ein Abstand (20) eines entlang der länglichen Erstreckung des zumindest einen ersten Steges (6) verlaufenden Grates (10) zu einem Oberflächenniveau (13) der Außenfläche (2,3) des Reifens (1) in Richtung (11) der Abnahme der Höhe (7) des zumindest einen ersten Steges (6) abnimmt.

8. Fahrzeugreifen (1) nach zumindest einem der vorhergehenden Ansprüche, **dadurch gekennzeichnet, dass** die längliche Erstreckung des zumindest einen ersten Steges (6) einen zumindest teilweise geradlinigen und/oder zumindest teilweise gekrümmten, insbesondere bogenförmig gekrümmten, Verlauf aufweist.

9. Fahrzeugreifen (1) nach zumindest einem der vorhergehenden Ansprüche, **dadurch gekennzeichnet, dass** die maximale Höhe (15) des zumindest einen ersten Steges (6) 0,1 mm bis 0,7 mm, bevorzugt 0,2 mm bis 0,5 mm, besonders bevorzugt 0,3 mm, beträgt.

10. Fahrzeugreifen (1) nach zumindest einem der vorhergehenden Ansprüche, **dadurch gekennzeichnet, dass** die nebeneinander angeordneten Stege (6) der Oberflächenkontraststruktur (5) einen Wiederholungsabstand (16) von 0,4 mm bis 0,7 mm, besonders bevorzugt 0,5 mm bis 0,6 mm, aufweisen.

11. Fahrzeugreifen (1) nach zumindest einem der vorhergehenden Ansprüche, **dadurch gekennzeichnet, dass** die Oberflächenkontraststruktur (5) auf einer Seitenwandaußenfläche (2) des Fahrzeugluftreifens (1) angeordnet ist und dass die Stege (6) in ihrer länglichen Erstreckung einen Winkel (19) von -45° bis 45°, bevorzugt -30° bis 30°, besonders bevorzugt in etwa 0°, mit einer radialen Richtung rR einschließen.

12. Fahrzeugreifen (1) nach zumindest einem der vorhergehenden Ansprüche, **dadurch gekennzeichnet, dass** die Oberflächenkontraststruktur (5) auf einer Seitenwandaußenfläche (2) des Fahrzeugluftreifens (1) angeordnet ist und dass die die Höhe (7) von radial innen nach radial außen oder von radial außen nach radial innen abnimmt.

13. Fahrzeugreifen (1) nach zumindest einem der vorhergehenden Ansprüche, **dadurch gekennzeichnet, dass** die Oberflächenkontraststruktur (5) von zumindest einem graphischen Element (22) unterbrochen ist, das frei von einer derartigen Oberflächenkontraststruktur (5) ist, und dass die Oberflächenkontraststruktur (5) das graphische Element umgibt.

14. Fahrzeugreifen (1) nach zumindest einem der vorhergehenden Ansprüche, **dadurch gekennzeichnet, dass** das Flächenelement (4) auf der Seitenwandaußenfläche (2) und/oder der Laufstreifenaußenfläche (3), bevorzugt auf einer Seitenwandaußenfläche (2), angeordnet ist.

15. Verfahren zur Herstellung eines Fahrzeugreifens (1) nach zumindest einem der vorhergehenden Ansprüche, **dadurch gekennzeichnet, dass** der Fahrzeugreifen (1) mittels einer eine Formfläche aufweisenden Vulkanisationsform formgebend vulkanisiert wird, wobei die Formfläche eine Negativkontur der Oberflächenkontraststruktur (5) aufweist.

## Claims

1. Vehicle tyre (1) having at least one planar element (4) which is configured on an external face (2, 3) of the vehicle tyre (1), in particular on a sidewall external face (2) and/or a tread external face (3), and has a contrasting surface structure (5) having webs (6) disposed next to one another, wherein a height (7) at least of one first web (6) of the webs (6) continuously decreases along the elongate extent of the at least one first web (6),
**characterized in that**
the webs (6), disposed next to one another, of the contrasting surface structure (5) have a repeat spacing (16) of 0.2 mm to 1.2 mm.

2. Vehicle tyre (1) according to at least one of the preceding claims, **characterized in that** the height (7) of the at least one first web (6) along the elongate extent thereof decreases by a total of at least 60%, preferably by at least 80%, particularly preferably by 100%.

3. Vehicle tyre (1) according to at least one of the preceding claims, **characterized in that** at least 50% of the webs (6), preferably all webs (6), of the contrasting surface structure (5) are configured as first webs (6).

4. Vehicle tyre (1) according to at least one of the preceding claims, **characterized in that** the height (7) of the at least one first web (6) along the elongate extent thereof decreases by way of a constant gradient.

5. Vehicle tyre (1) according to at least one of the preceding claims, **characterized in that** the height (7) of the at least one first web (6) along the elongate extent thereof decreases by way of a gradient of 0.6° to 3.5°.

6. Vehicle tyre (1) according to at least one of the preceding claims, **characterized in that** a ridge (10) of the at least one first web (6), which runs along the elongate extent of the at least one first web (6), in terms of a surface level (13) of the external face (2, 3) of the tyre (1) is completely or partially inwardly offset.

7. Vehicle tyre (1) according to at least one of the preceding claims, **characterized in that** a spacing (20) of a ridge (10), which runs along the elongate extent of the at least one first web (6), in relation to a surface level (13) of the external face (2, 3) of the tyre (1) decreases in the direction (11) of the decrease in the height (7) of the at least one first web (6).

8. Vehicle tyre (1) according to at least one of the preceding claims, **characterized in that** the elongate extent of the at least one first web (6) has an at least partially rectilinear and/or at least partially curved, in particular arcuate, profile.

9. Vehicle tyre (1) according to at least one of the preceding claims, **characterized in that** the maximum height (15) of the at least one first web (6) is 0.1 mm to 0.7 mm, preferably 0.2 mm to 0.5 mm, particularly preferably 0.3 mm.

10. Vehicle tyre (1) according to at least one of the preceding claims, **characterized in that** the webs (6), disposed next to one another, of the contrasting surface structure (5) have a repeat spacing (16) of 0.4 mm to 0.7 mm, particularly preferably 0.5 mm to 0.6 mm.

11. Vehicle tyre (1) according to at least one of the preceding claims, **characterized in that** the contrasting surface structure (5) is disposed on a sidewall external face (2) of the pneumatic vehicle tyre (1), and **in that** the webs (6) in terms of the elongate extent thereof, conjointly with a radial direction rR, enclose an angle (19) of -45° to 45°, preferably -30° to 30°, particularly preferably approximately 0°.

12. Vehicle tyre (1) according to at least one of the preceding claims, **characterized in that** the contrasting surface structure (5) is disposed on a sidewall external face (2) of the pneumatic vehicle tyre (1), and **in that** the height (7) decreases from radially inside to radially outside, or from radially outside to radially inside.

13. Vehicle tyre (1) according to at least one of the preceding claims, **characterized in that** the contrasting surface structure (5) is interrupted by at least one graphic element (22) which is free of a contrasting surface structure (5) of this type, and **in that** the contrasting surface structure (5) surrounds the graphic element.

14. Vehicle tyre (1) according to at least one of the preceding claims, **characterized in that** the planar element (4) is disposed on the sidewall external face (2) and/or the tread external face (3), preferably on a sidewall external face (2).

15. Method for producing a vehicle tyre (1) according to at least one of the preceding claims, **characterized in that** the vehicle tyre (1) is vulcanized in a shape-imparting manner by means of a vulcanization mould having a mould face, wherein the mould face has a negative contour of the contrasting surface structure (5).

## Revendications

1. Pneu de véhicule (1) avec au moins un élément de surface (4) réalisé sur une surface extérieure (2, 3) du pneu de véhicule (1), notamment une surface extérieure de paroi latérale (2) et/ou une surface extérieure de bande de roulement (3), avec une structure de contraste de surface (5) avec des nervures (6) agencées les unes à côté des autres, une hauteur (7) d'au moins une première nervure (6) des nervures (6) diminuant continuellement le long de l'étendue longitudinale de l'au moins une première nervure (6),
**caractérisé en ce que**
les nervures (6) de la structure de contraste de surface (5), agencées les unes à côté des autres, présentent une distance de répétition (16) de 0,2 mm à 1,2 mm.

2. Pneu de véhicule (1) selon au moins l'une quelconque des revendications précédentes, **caractérisé en ce que** la hauteur (7) de l'au moins une première nervure (6) diminue le long de son étendue longitudinale au total d'au moins 60 %, de préférence d'au moins 80 %, de manière particulièrement préférée de 100 %.

3. Pneu de véhicule (1) selon au moins l'une quelconque des revendications précédentes, **caractérisé en ce qu'**au moins 50 % des nervures (6), de préférence toutes les nervures (6), de la structure de contraste de surface (5) sont réalisées sous forme de premières nervures (6).

4. Pneu de véhicule (1) selon au moins l'une quelconque des revendications précédentes, **caractérisé en ce que** la hauteur (7) de l'au moins une première nervure (6) diminue avec une pente constante le long de son étendue longitudinale.

5. Pneu de véhicule (1) selon au moins l'une quelconque des revendications précédentes, **caractérisé en ce que** la hauteur (7) de l'au moins une première nervure (6) diminue le long de son étendue longitudinale avec une pente de 0,6° à 3,5°.

6. Pneu de véhicule (1) selon au moins l'une quelconque des revendications précédentes, **caractérisé en ce qu'**une arête (10) de l'au moins une première nervure (6), qui s'étend le long de l'étendue longitudinale de l'au moins une première nervure (6), est reculée en totalité ou en partie vers l'intérieur par rapport à un niveau de surface (13) de la surface extérieure (2, 3) du pneu (1).

7. Pneu de véhicule (1) selon au moins l'une quelconque des revendications précédentes, **caractérisé en ce qu'**une distance (20) entre une arête (10) s'étendant le long de l'étendue longitudinale de l'au moins une première nervure (6) et un niveau de surface (13) de la surface extérieure (2,3) du pneu (1) diminue dans la direction (11) de la diminution de la hauteur (7) de l'au moins une première nervure (6).

8. Pneu de véhicule (1) selon au moins l'une quelconque des revendications précédentes, **caractérisé en ce que** l'étendue longitudinale de l'au moins une première nervure (6) présente un tracé au moins partiellement rectiligne et/ou au moins partiellement courbé, notamment courbé en forme d'arc.

9. Pneu de véhicule (1) selon au moins l'une quelconque des revendications précédentes, **caractérisé en ce que** la hauteur maximale (15) de l'au moins une première nervure (6) est de 0,1 mm à 0,7 mm, de préférence de 0,2 mm à 0,5 mm, de manière particulièrement préférée de 0,3 mm.

10. Pneu de véhicule (1) selon au moins l'une quelconque des revendications précédentes, **caractérisé en ce que** les nervures (6) de la structure de contraste de surface (5), agencées les unes à côté des autres, présentent une distance de répétition (16) de 0,4 mm à 0,7 mm, de manière particulièrement préférée de 0,5 mm à 0,6 mm.

11. Pneu de véhicule (1) selon au moins l'une quelconque des revendications précédentes, **caractérisé en ce que** la structure de contraste de surface (5) est agencée sur une surface extérieure de paroi latérale (2) du pneu de véhicule (1) et **en ce que** les nervures (6) forment, dans leur étendue longitudinale, un angle (19) de -45° à 45°, de préférence de -30° à 30°, de manière particulièrement préférée d'environ 0°, avec une direction radiale rR.

12. Pneu de véhicule (1) selon au moins l'une quelconque des revendications précédentes, **caractérisé en ce que** la structure de contraste de surface (5) est agencée sur une surface extérieure de paroi latérale (2) du pneu de véhicule (1) et **en ce que** la hauteur (7) diminue de l'intérieur radialement vers l'extérieur radialement ou de l'extérieur radialement vers l'intérieur radialement.

13. Pneu de véhicule (1) selon au moins l'une quelconque des revendications précédentes, **caractérisé en ce que** la structure de contraste de surface (5) est interrompue par au moins un élément graphique (22) qui est exempt d'une telle structure de contraste de surface (5), et **en ce que** la structure de contraste de surface (5) entoure l'élément graphique.

14. Pneu de véhicule (1) selon au moins l'une quelconque des revendications précédentes, **caractérisé en ce que** l'élément de surface (4) est agencé sur la surface extérieure de paroi latérale (2) et/ou sur la surface extérieure de bande de roulement (3), de préférence sur une surface extérieure de paroi latérale (2).

15. Procédé de fabrication d'un pneu de véhicule (1) selon au moins l'une quelconque des revendications précédentes, **caractérisé en ce que** le pneu de véhicule (1) est vulcanisé avec moulage au moyen d'un moule de vulcanisation présentant une surface de moulage, la surface de moulage présentant un contour négatif de la structure de contraste de surface (5).
